# EUROPEAN PATENT APPLICATION

(11) **EP 2 458 142 A2**
(43) Date of publication of application: **30.05.2012**
(21) Application number: 11190151.8
(22) Date of filing: 22.11.2011
(51) Int. Cl.: E21B 33/076, E21B 47/00

(54) **Emergency disconnect sequence video capture and playback**

(30) Priority: 30.11.2010 US 957037
(71) Applicant: Hydril USA Manufacturing LLC, Houston, TX 77032 (US)
(72) Inventor: Ebenezer, Joseph Prem, Houston, TX Texas 77032 (US)
(74) Representative: Williams, Andrew Richard

(57) **Abstract**

Emergency disconnect sequence (EDS) video capture systems and method. The EDS video capture system includes a stack screen on a drilling platform, the stack screen including an EDS button to initiate an EDS signal to be sent to multiplex pods resulting in an EDS including a plurality of functions being performed by devices in one or both of a lower marine riser package and a blowout preventer stack, and an EDS function status indicator. The indicator is either a video capture device aimed at the stack screen to automatically capture one or more of the initiation of EDS signal by the EDS button and a progress of the EDS indicated by the EDS function status indicator as EDS evidence or a video card to capture one or more of the initiation of the EDS signal by the EDS button and a progress of the EDS indicated by the EDS function status indicator as EDS evidence, and a storage to store the EDS evidence.

## Description

### BACKGROUND

### TECHNICAL FIELD

Embodiments of the subject matter disclosed herein generally relate to methods and systems and, more particularly, to mechanisms and techniques for capturing video evidence of the initiation and/or progress of an emergency disconnect sequence.

### DISCUSSION OF THE BACKGROUND

During the past years, with the increase in price of fossil fuels, the interest in developing new production fields has increased dramatically. However, the availability of land-based production fields is limited. Thus, the industry has now extended drilling to offshore locations, which appear to hold a vast amount of fossil fuel.

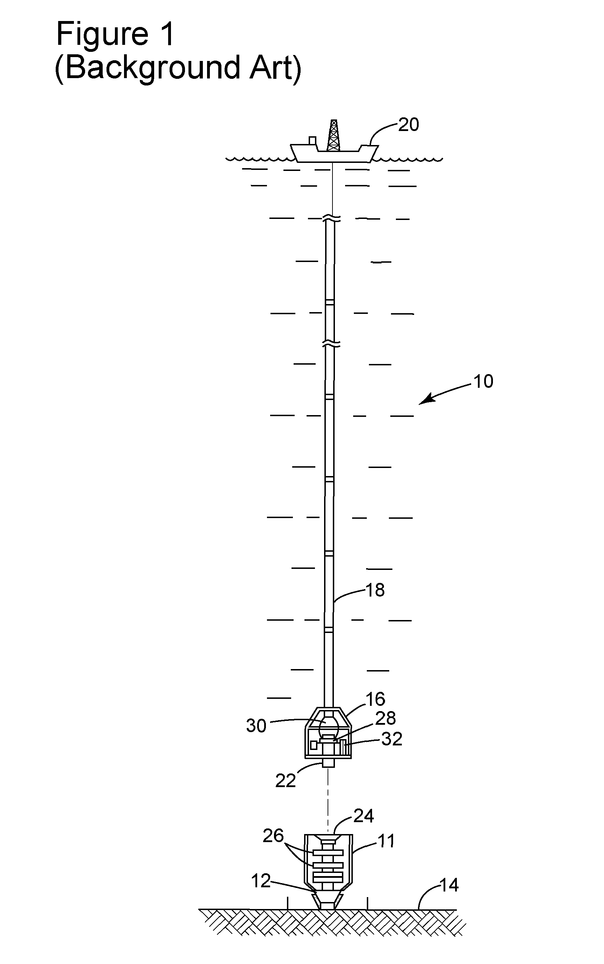

The existing technologies for extracting the fossil fuel from offshore fields may use a system 10 as shown in Figure 1. More specifically, a blowout preventer stack ("BOP stack") 11 may be rigidly attached to a wellhead 12 upon the sea floor 14, while a Lower Marine Riser Package ("LMRP") 16 may be retrievably disposed upon a distal end of a marine riser 18, extending from a drill ship 20 or any other type of surface drilling platform or vessel. As such, the LMRP 16 may include a stinger 22 at its distal end configured to engage a receptacle 24 located on a proximal end of the BOP stack 11.

In typical configurations, the BOP stack 11 may be rigidly affixed atop the subsea wellhead 12 and may include (among other devices) a plurality of ram-type blowout preventers 26 useful in controlling the well as it is drilled and completed. Similarly, the LMRP 16 may be disposed upon a distal end of a long flexible riser 18 that provides a conduit through which drilling tools and fluids may be deployed to and retrieved from the subsea wellbore. Ordinarily, the LMRP 16 may include (among other things) one or more ram-type blowout preventers 28 at its distal end, an annular blowout preventer 30 at its upper end, and multiplex (MUX) pods 32.

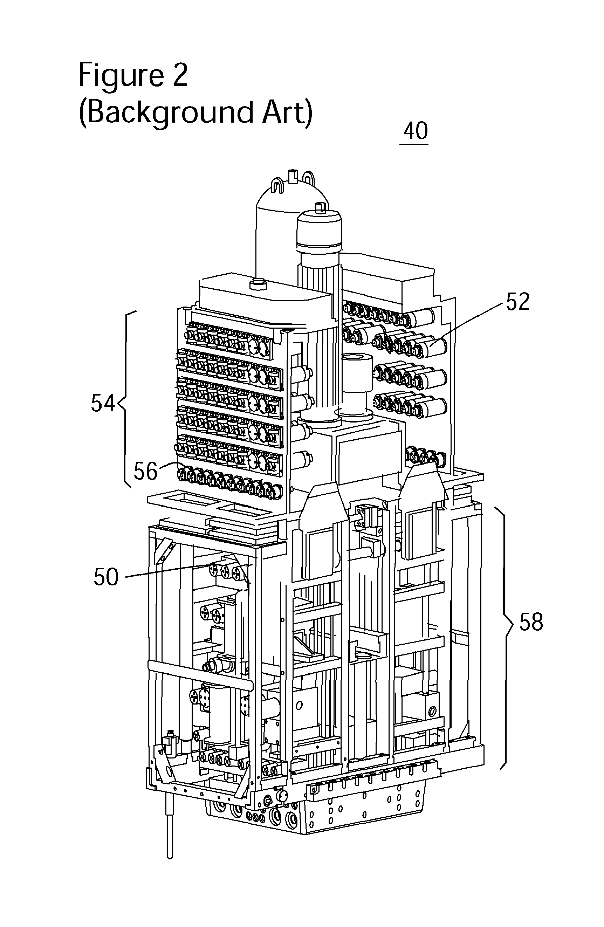

A MUX pod system 40, is shown in Figure 2 and may provide between 50 and 100 different functions to the BOP stack and/or the LMRP and these functions may be initiated and/or controlled from or via the MUX BOP Control System.

The MUX pod 40 may be fixedly attached to a frame (not shown) of the LMRP and may include hydraulically activated valves 50 (called in the art sub plate mounted ("SPM") valves) and solenoid valves 52 that are fluidly connected to the hydraulically activated valves 50. The solenoid valves 52 are provided in an electronic section 54 and are designed to be actuated by sending an electrical signal from an electronic control board (not shown). Each solenoid valve 52 may be configured to activate a corresponding hydraulically activated valve 50. The MUX pod 40 may include pressure sensors 56 also mounted in the electronic section 54. The hydraulically activated valves 50 are provided in a hydraulic section 58 and may be fixedly attached to the MUX pod 40.

A bridge between the LMRP 16 and the BOP stack 11 is formed that matches the multiple functions from the LMRP 16 to the BOP stack 11, e.g., fluidly connects the SPM valves 50 from the MUX pod provided on the LMRP to dedicated components on the BOP stack or the LMRP. The MUX pod system is used in addition to choke and kill line connections (not shown) or lines that ensure pressure supply for the shearing function of the BOPs.

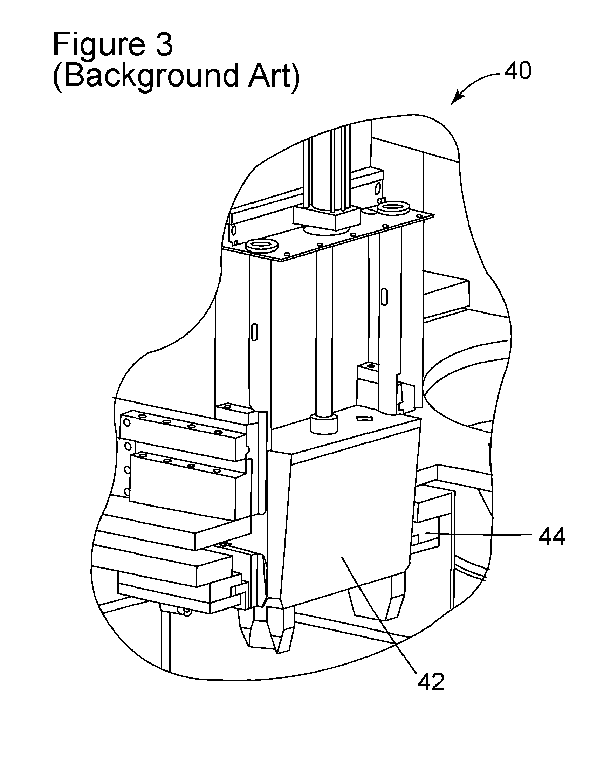

The bridge is shown in Figure 3 and may include a pod wedge 42 configured to engage a receiver 44 on the BOP stack. The pod wedge 42 has plural holes (not shown), depending on the number of functions provided, that provides hydraulic fluids from the LMRP 16 to the BOP stack 11.

In typical subsea blowout preventer installations, multiplex ("MUX") cables (electrical) and/or lines (hydraulic) transport control signals (via the MUX pod and the pod wedge) to the LMRP 16 and BOP stack 11 devices so the specified tasks may be controlled from the surface. Once the control signals are received, subsea control valves are actuated and (in most cases) high-pressure hydraulic lines are directed to perform the specified tasks. Thus, a multiplexed electrical or hydraulic signal may operate a plurality of "low pressure" valves to actuate larger valves to communicate the high-pressure hydraulic lines with the various operating devices of the wellhead stack.

Examples of communication lines bridged between LMRPs and BOP stacks through feed-thru components include, but are not limited to, hydraulic choke lines, hydraulic kill lines, hydraulic multiplex control lines, electrical multiplex control lines, electrical power lines, hydraulic power lines, mechanical power lines, mechanical control lines, electrical control lines, and sensor lines. In certain embodiments, subsea wellhead stack feed-thru components include at least one MUX "pod" connection whereby a plurality of hydraulic control signals are grouped together and transmitted between the LMRP 16 and the BOP stack 11 in a single mono-block feed-thru component as shown, for example, in Figure 3.

When desired, ram-type blowout preventers of the LMRP 16 and the BOP stack 11 may be closed and the LMRP 16 may be detached from the BOP stack 11 and retrieved to the surface, leaving the BOP stack 11 atop the wellhead. For example, it may be necessary to retrieve the LMRP 16 from the wellhead stack in times of inclement weather or when work on a particular wellhead is to be temporarily stopped.

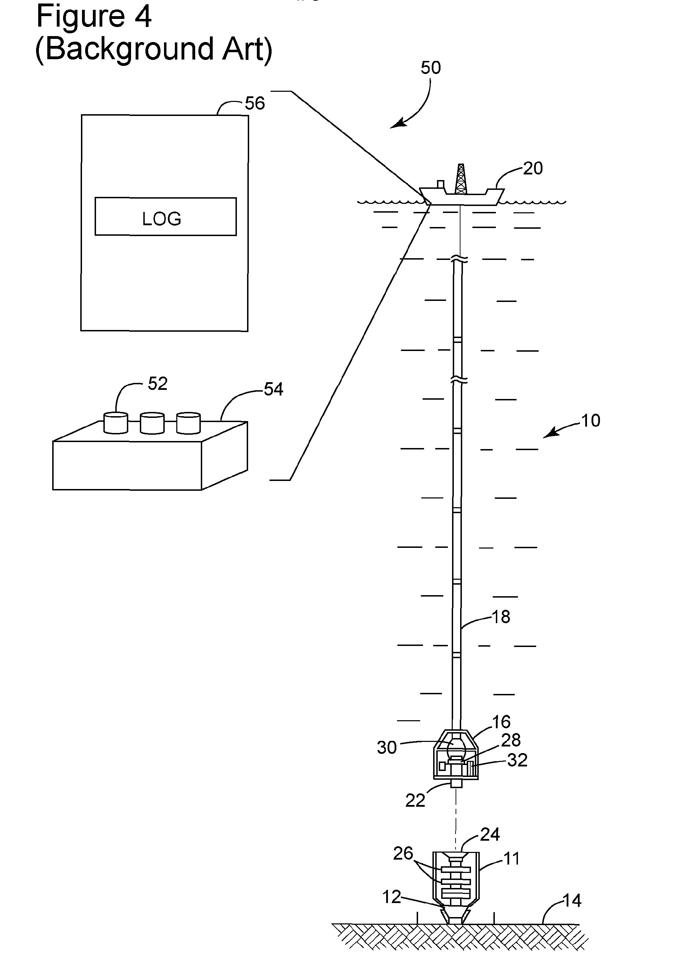

To retrieve the LMRP 16 from the wellhead stack, an Emergency Disconnect Sequence ("EDS") may be initiated. An EDS may include a number of different functions that are to be performed by the LMRP 16 and the BOP stack. The functions of the EDS may be carried out by the LMRP 16 and/or the BOP stack as set forth above via the MUX pod 40 and/or the bridge. A particular EDS may include a predetermined number of functions. For example, one particular EDS may include eighteen (18) functions while another EDS may include twenty-five (25) functions. A particular EDS may take a predetermined period of time to complete. For example, one particular EDS may take 20 (twenty) seconds to complete while another EDS may take 25 (twenty-five) seconds to complete. An EDS may be initiated using an EDS system 50 as shown in Figure 4. An EDS may be initiated or fired by pressing an EDS button 52 located on a stack controller 54 located on the drill ship 20. Once the EDS is fired, the functions included in that EDS may be performed until all of the functions are complete.

Verification that an operator initiated an EDS and/or of the progression of the EDS may be desired. Conventionally, such verification may be provided via a manual log 56. When an operator selects or presses the EDS button 52 located on the stack controller 54, the log 56 may be updated to reflect the initiation of the EDS. However, this conventional approach is problematic. For example, the accuracy of such a log may itself be in question and may need verification. Further, beyond the log, conventional systems may not include any additional tool to verify that the operator initiated the EDS.

Therefore, it is desired to provide a novel approach for capturing evidence of the initiation and/or progression of an EDS.

### SUMMARY

According to one exemplary embodiment, there is an emergency disconnect sequence video capture system. The emergency disconnect sequence video capture system includes a stack screen on a drilling platform, the stack screen including an emergency disconnect sequence button to initiate an emergency disconnect sequence signal to be sent to a multiplex pod resulting in an emergency disconnect sequence including a plurality of functions being performed by devices in one or both of a lower marine riser package and a blowout preventer stack, and an emergency disconnect sequence function status indicator, either a video capture device aimed at the stack screen to automatically capture one or more of the initiation of the emergency disconnect sequence signal by the emergency disconnect sequence button and a progress of the emergency disconnect sequence indicated by the emergency disconnect sequence function status indicator as emergency disconnect sequence evidence, or a video card to capture video captures of one or more of the initiation of the emergency disconnect sequence signal by the emergency disconnect sequence button and a progress of the emergency disconnect sequence indicated by the emergency disconnect sequence function status indicator as emergency disconnect sequence evidence, and a storage connected to either the video capture device or the video card and configured to store said emergency disconnect sequence evidence.

According to another exemplary embodiment, there is an emergency disconnect sequence system. The system includes a blowout preventer stack, a lower marine riser package releasably connectable to the blowout preventer stack, a multiplex pod connected to the lower marine riser package, the multiplex pods to receive an emergency disconnect sequence signal and to transport electric and/or hydraulic control signals to devices in one or both of the lower marine riser package and the blowout preventer stack in response to the emergency disconnect sequence signal, a marine riser connected to the LMRP, a drilling platform connected to the marine riser, and a stack screen on the drilling platform, the stack screen including an emergency disconnect sequence button to initiate the emergency disconnect sequence signal sent to the multiplex pods resulting in an emergency disconnect sequence including a plurality of functions being performed by the devices in the one or both of the lower marine riser package and the blowout preventer stack, and an emergency disconnect sequence function status indicator, either a video capture device aimed at the stack screen to automatically capture one or more of the initiation of the emergency disconnect sequence signal by the emergency disconnect sequence button and a progress of the emergency disconnect sequence indicated by the emergency disconnect sequence function status indicator as emergency disconnect sequence evidence, or a video card to capture videos of one or more of the initiation of the emergency disconnect sequence signal by the emergency disconnect sequence button and a progress of the emergency disconnect sequence indicated by the emergency disconnect sequence function status indicator as emergency disconnect sequence evidence, and and a storage to store said emergency disconnect sequence evidence.

According to another exemplary embodiment, there is a method to capture emergency disconnect sequence evidence. The method includes receiving, into a computing device, a video image from either a video capture device aimed at a stack screen interface or from a video card, the video image including one or both of an initiation of an emergency disconnect sequence by an operator touching an emergency disconnect sequence button on the stack screen interface, and a progress of the emergency disconnect sequence indicated by an emergency disconnect sequence function status indicator, and storing, in a storage in communication with the computing device, the video image from the video capture device or the video card as the emergency disconnect sequence evidence.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a conventional offshore rig;
Figure 2 is a schematic diagram of a MUX pod;
Figure 3 is a schematic diagram of a feed-thru connection of a MUX pod attached to a subsea structure;
Figure 4 is a schematic diagram of a conventional EDS system;
Figure 5 is a schematic diagram of an EDS system according to an exemplary embodiment;
Figures 6 and 7 are schematic diagrams of EDS evidence according to an exemplary embodiment.
Figure 8 is a flow chart of a method according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of an emergency disconnect sequence ("EDS") system provided with a stack screen for initiating an EDS and/or monitoring the status of that EDS. However, the embodiments to be discussed next are not limited to these systems, but may be applied to other systems (e.g., diverter systems) that may include other interfaces (e.g., alarms screen, diverter screen, events screen, utility screen) for initiating and/or monitoring the status of other sequences (e.g., alarms, diverter sequences, events).

Reference throughout the specification to "an exemplary embodiment" or "another exemplary embodiment" means that a particular feature, structure, or characteristic described in connection with an embodiment is included in at least one embodiment of the subject matter disclosed. Thus, the appearance of the phrases "in an exemplary embodiment" or "in another exemplary embodiment" in various places throughout the specification is not necessarily referring to the same embodiment. Further, the particular features, structures or characteristics may be combined in any suitable manner in one or more embodiments.

According to an exemplary embodiment, a video capture device may be aimed at a stack screen to automatically capture an initiation of an EDS signal by an EDS button and/or a progress of the EDS indicated by an EDS function status indicator as EDS evidence. The EDS evidence may be stored with a timestamp and subsequently replayed. In this way, that an operator initiated a particular EDS and/or the progression of the EDS may be verified. This may supplement or replace manual log verification.

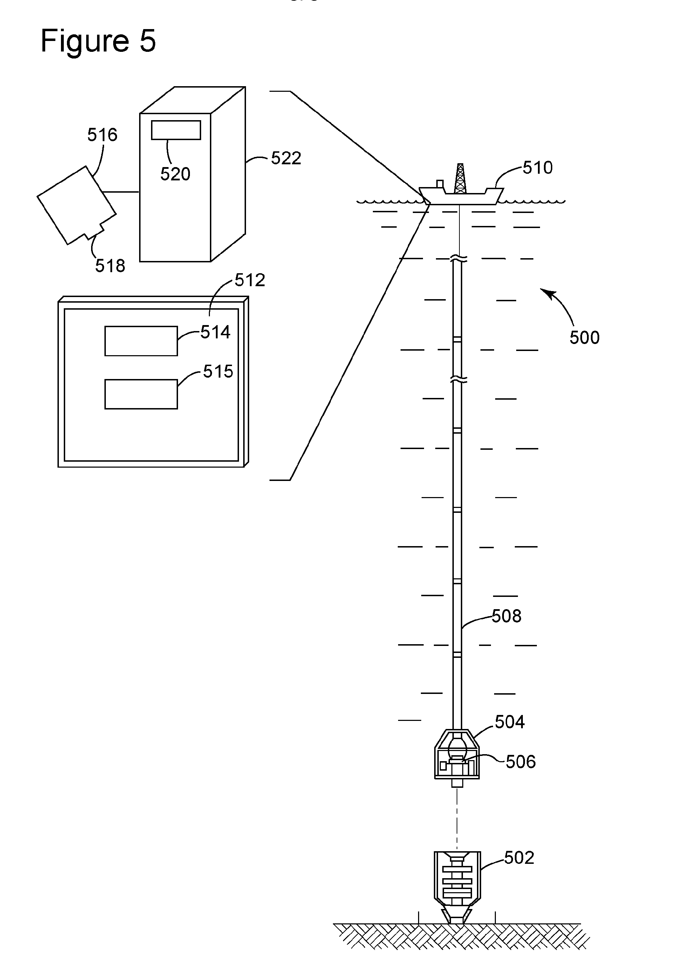

According to an exemplary embodiment shown in Figure 5, an EDS system 500 may include a BOP stack 502, a LMRP 504, MUX pods 506, a marine riser 508, a drilling platform 510, a stack screen 512, a video capture device 516, and a computing device 522. The LMRP 504 may be releasably connectable to the BOP stack 502. The MUX pods 506 may be connected to the LMRP 504. The marine riser 508 may be connected to the LMRP 504. The drilling platform 510 may be connected to the marine riser 508. The stack screen 512, video capture device 516, and the computing device 522 may be located on the drilling platform 510. The MUX pods 506 may receive an EDS signal and may transport electric and/or hydraulic control signals to devices in the LMRP 504 and/or the BOP stack 502 in response to the EDS signal.

The stack screen 512 may include a number of different controls and displays including an EDS button 514 and an EDS function status indicator 515. The EDS button 514 may initiate the EDS signal sent to the MUX pod and may result in an EDS including a plurality of functions being performed by the devices in the LMRP 504 and/or the BOP stack 502. The EDS may include a predetermined number of functions as the plurality of functions and may last for a predetermined period of time. Each function may last a corresponding amount of time. The EDS function status indicator 515 may indicate a status (e.g., complete) of a function of the plurality of functions. In an exemplary embodiment, the EDS button 514 and the EDS function status indicator 515 are two separate elements on the stack screen 512. In another exemplary embodiment, the EDS button 514 and the EDS function status indicator 515 may be the same element.

In an exemplary embodiment, the stack screen 512 may be a touch-screen. The stack screen 512 may include the EDS button 514 and the EDS function status indicator 515 as touch-screen displays. In another exemplary embodiment, the stack screen may be a computer display. The stack screen may include the EDS button as a selectable control on the computer display and the EDS function status indicator as a display on the computer display. In another exemplary embodiment, the stack screen may be a physical control panel. The stack screen may include the EDS button as a physical button and the EDS function status indicator as a display.

The video capture device 516 may be aimed at the stack screen 512 to capture the initiation of the EDS signal by the EDS button and/or a progress of the EDS as indicated by the EDS function status indicator as EDS evidence. The computing device 522 may include a storage 520. The storage 520 may store the EDS evidence. In another exemplary embodiment, the computing device 522 may be in communication with a remote storage.

The video capture device 516 may be a digital video capture device. The computing device 522 may include software including video capture and playback capabilities, such as the QNX operating system by QNX Software Systems Co. The computing device 522 may be in communication with and drive the video capture device 516. The video capture device 516 may include a video capture device lens 518. The video capture device lens 518 may be aimed at the stack screen 512. As such, the video capture device 516 may capture the initiation of the EDS signal by the EDS button and/or the progress of the EDS as indicated by the EDS function status indicator as an EDS video. The storage 520 may store the EDS video as a digital video file.

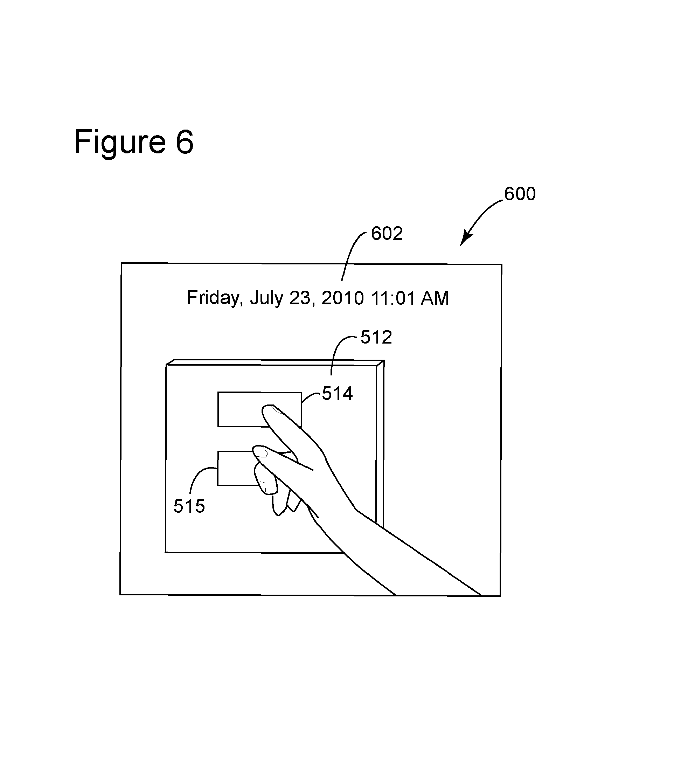

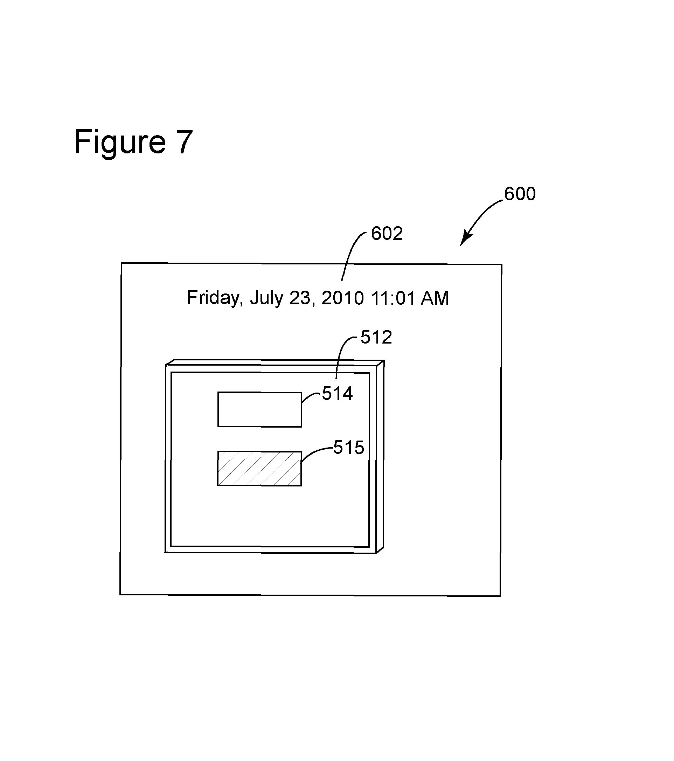

According to an exemplary embodiment shown in Figures 6 and 7, EDS evidence 600 may be captured by the video capture device 516 as an EDS video. The EDS video may include a timestamp 602 indicating the time and date of the EDS video. In one application, the time stamp may be as accurate as desired, e.g., to the second. In Figure 6, the EDS video shows an operator's finger initiating an EDS by touching the EDS button 514. Thus, the time when the operator has initiated the EDS sequence may be recorded. Other actions of the operator may also be recorded. In Figure 7, the EDS video shows a progress of the EDS as indicated by the EDS function status indicator 515. In an exemplary embodiment, the EDS function status indicator 515 may indicate the status of a function by changing color. In another exemplary embodiment, the EDS function status indicator 515 may indicate the status of a function using other function status indicators. Thus, this system may be able to record each function that is being activated by the operator and also the time progression of each function. In one embodiment, any action of the operator on the stack screen may be recorded with the associated timestamp.

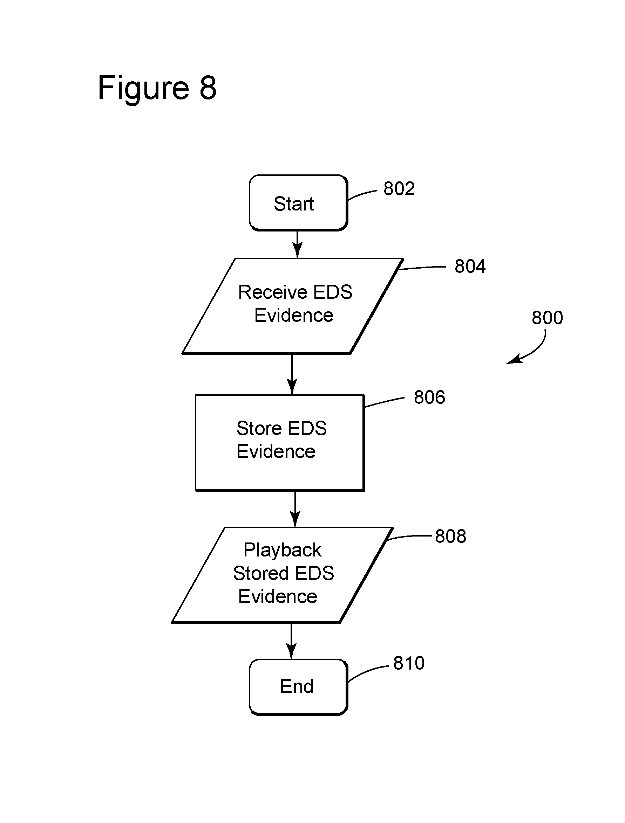

The operation of the EDS system 500 of Figures 5-7 is now described with reference to Figure 8, which is a flow chart of a method 800 according to an exemplary embodiment.

In operation 802, the method may begin. Before initiation of an EDS, the video capture device 516 may be initiated. In an exemplary embodiment, the software including video capture and playback capabilities of the computing device 522 may initialize the video capture device 516. The video capture device lens 518 may be aimed at the stack screen 512. The video capture device 516 may then capture a video image of an initiation of an EDS by an operator touching the EDS button 514 (Figure 6). Additionally and/or alternatively, the video capture device may capture a progress of the EDS as indicated by the EDS function status indicator 515 (Figure 7). In operation 804, the computing device 522 may receive the video image of the initiation of the EDS by the operator touching the EDS button 514 and/or the progress of the EDS as indicated by the EDS function indicator 515 (i.e., the EDS evidence). In operation 806, the computing device 522 may store the EDS evidence in the storage 520. In an exemplary embodiment, the computing device 522 provides the timestamp 602 that is added to the video image. In another exemplary embodiment, the video capture device 516 provides the timestamp 602 that is part of the video image. In operation 808, the computing device plays back the EDS evidence. In operation 810, the operation ends. In this way, a time-stamped video of the entire EDS as it is happening on the stack screen 512 may be obtained. The video may serve as a time-stamped record of the initiation of an EDS and/or which functions were fired and when they were fired at any particular time instant.

In another exemplary embodiment, the video capture feature may be employed to capture videos of functions to be fired during different types of well control situations that may not require the emergency disconnect sequence. This may be effectively used as a training tool for field service engineers and rig personnel.

In another exemplary embodiment, the video capture feature can be employed to capture videos of sequences in other devices like Diverter systems for Diverter Packer Close sequences, adjusting regulators, setting up the MUX BOP Control System for normal drilling operations etc.

In another exemplary embodiment, the video capture device may be replaced by and/or include a microphone positioned near the stack screen. The microphone may capture the initiation of the EDS signal by the EDS button and/or the progress of the EDS as indicated by the EDS function status indicator as EDS audio. For example, the EDS button may be configured to cause an audible sound upon selection by an operator. Audible sounds may indicate progress points of the EDS.

In another exemplary embodiment, the video capture device may be replaced by and/or include a logging system in communication with the EDS button and/or the EDS function status indicator. The logging system in communication with the EDS button and/or EDS function status indicator may include computer executable instructions causing the computing device to monitor operator interactions with the stack screen 512. The logging system may capture, in a logging file constituting the EDS evidence, an operator interaction of selecting the EDS button and/or the progress of the EDS as indicated by the EDS function status indicator.

The EDS evidence (and any other evidence that may be recorded or logged by the system) may be then transmitted wireless or wired to a storage system located on ground. In this way, in the eventuality of the total failure of the rig, e.g., fire or flooding, the EDS evidence may not be destroyed together with the rig. The processor handling the recording of the EDS evidence may be programmed to recognized when the EDS evidence is recorded and to transmit in real time the recorded data to a satellite or other station as the evidence. In one exemplary embodiment, when the operator starts the EDS sequence, the processor may be configured to connect to a satellite or a station for transmitting the information being recorded for safety. Thus, the computing device 522 may include or may be connected to corresponding electronic circuitry, like a transmitter, receiver, amplifier, antenna, or the like for communicating with a satellite or an earth based station.

The disclosed exemplary embodiments provide EDS systems and a method for capturing video evidence of the initiation and/or progress of an emergency disconnect sequence. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. An emergency disconnect sequence video capture system (500) comprising:
a stack screen (512) on a drilling platform (510), the stack screen including an emergency disconnect sequence button (514) to initiate an emergency disconnect sequence signal to be sent to multiplex pods (506) resulting in an emergency disconnect sequence including a plurality of functions being performed by devices in one or both of a lower marine riser package (16) and a blowout preventer stack (11), and an emergency disconnect sequence function status indicator (515);
either a video capture device (516) aimed at the stack screen to automatically capture one or more of the initiation of the emergency disconnect sequence signal by the emergency disconnect sequence button and a progress of the emergency disconnect sequence indicated by the emergency disconnect sequence function status indicator as emergency disconnect sequence evidence, or a video card to capture video captures of one or more of the initiation of the emergency disconnect sequence signal by the emergency disconnect sequence button and a progress of the emergency disconnect sequence indicated by the emergency disconnect sequence function status indicator as emergency disconnect sequence evidence; and
a storage (520) connected to either the video capture device (516) or the video card and configured to store said emergency disconnect sequence evidence.

2. The emergency disconnect sequence video capture system (500) of claim 1, wherein the emergency disconnect sequence evidence further includes a timestamp (602).

3. The emergency disconnect sequence video capture system (500) of either of claim 1 or 2, wherein the video capture device comprises a digital video capture device to capture the one or more of the initiation of the emergency disconnect sequence signal by the emergency disconnect sequence button (514) and the progress of the emergency disconnect sequence indicated by the emergency disconnect sequence function status indicator (515) as an emergency disconnect sequence digital video file.

4. The emergency disconnect sequence video capture system (500) of any one of the preceding claims, further comprising an evidence playback device to playback the emergency disconnect sequence evidence.

5. The emergency disconnect sequence video capture system (500) of any one of the preceding claims, wherein the stack screen (512) is a touch-screen including the emergency disconnect sequence button (514) and the emergency disconnect sequence function status indicator (515) as touch-screen displays.

6. The emergency disconnect sequence video capture system (500) of any one of the preceding claims, wherein the stack screen is a computer display including the emergency disconnect sequence button (514) as selectable control and the emergency disconnect sequence function status indicator (515) as a display on the computer display.

7. The emergency disconnect sequence video capture system (500) of claim 1, wherein the stack screen (512) is a physical control panel including the emergency disconnect sequence button (514) as a physical button and the emergency disconnect sequence function status indicator (515) as a display.

8. An emergency disconnect sequence system (500), the system comprising:
a blowout preventer stack (11);
a lower marine riser package (16) releasably connectable to the lower blowout preventer stack;
a multiplex pod (506) connected to the lower marine riser package, the multiplex pods to receive an emergency disconnect sequence signal and to transport electric and/or hydraulic control signals to devices in one or both of the lower marine riser package and the lower blowout preventer stack in response to the emergency disconnect sequence signal;
a marine riser (508) connected to the LMRP;
a drilling platform (510) connected to the marine riser; and further comprising the video capture system as claims in any of claims 1 to 7.

9. A method (800) to capture emergency disconnect sequence evidence, comprising:
receiving (802), into a computing device (522), a video image from either a video capture device (516) aimed at a stack screen (512) interface or from a video card, the video image including one or both of an initiation of an emergency disconnect sequence by an operator touching an emergency disconnect sequence button (514) on the stack screen interface, and a progress of the emergency disconnect sequence indicated by an emergency disconnect sequence function status indicator (515); and
storing (806), in a storage (520) in communication with the computing device, the video image from the video capture device or the video card as the emergency disconnect sequence evidence.

10. The method (800) to capture emergency disconnect sequence evidence of claim 9, further comprising playing back (808) the emergency disconnect sequence evidence.

11. The method (800) to capture emergency disconnect sequence evidence of either of claim 9 or 10, wherein the storing operation (806) comprises storing the emergency disconnect sequence evidence in the storage in the computing device (522).

12. The method (800) to capture emergency disconnect sequence evidence of any of claims 9 to 11, wherein the storing operation (806) further comprises storing a timestamp (602) as part of the emergency disconnect sequence evidence.

13. The method (800) to capture emergency disconnect sequence evidence of any of claims 9 to 12, wherein the receiving operation (804) comprises receiving the video image from a digital video capture device (516), and wherein the storing operation (806) comprises storing the emergency disconnect sequence evidence as a digital video file.

14. The method (800) to capture emergency disconnect sequence evidence of any of claims 9 to 13, wherein the receiving operation (804) comprises receiving the video image from the video capture device (516) aimed at a touch-screen stack screen (512) interface including the emergency disconnect sequence button (514) and the emergency disconnect sequence function status indicator (515) as touch-screen displays.

15. The method (800) to capture emergency disconnect sequence evidence of any of claims 9 to 14, wherein the receiving operation (804) comprises receiving the video image from the video card in the computing device (522).
